# EUROPÄISCHE PATENTSCHRIFT

(11) **EP 0 412 299 B1**
(45) Veröffentlichungstag und Bekanntmachung des Hinweises auf die Patenterteilung: **23.02.1994**
(21) Anmeldenummer: 90113063.3
(22) Anmeldetag: 09.07.1990
(51) Int. Cl.: B29C 67/18, B29C 33/00

(54) **Verfahren zur Herstellung einer Glasscheibe, insbesondere für Schiebedächer, und Vorrichtung zur Durchführung des Verfahrens**
Method for producing a glazing, in particular for sliding roofs and apparatus for realizing this method
Procédé de fabrication d'un vitrage, en particulier pour des toits ouvrants coulissants et appareil pour la mise en oeuvre du procédé

(30) Priorität: 05.08.1989 DE 3926017
(43) Veröffentlichungstag der Anmeldung: 13.02.1991
(73) Patentinhaber: ZIPPEX-Autotechnik Extrusions GmbH, D-74374 Zaberfeld (DE)
(72) Erfinder: Glatt, Hans Peter, D-7101 Ellhofen (DE)
(74) Vertreter: Patentanwälte Bartels und Partner

(56) Entgegenhaltungen:
- EP-A- 0 036 063
- EP-A- 0 128 379
- EP-A- 0 355 209
- WO-A-89/01398
- DE-A- 3 020 906
- DE-C- 3 738 400
- FR-A- 2 485 987
- GB-A- 2 171 442
- US-A- 4 618 322

## Beschreibung

Die Erfindung betrifft ein Verfahren zur Herstellung einer Glasscheibe, insbesondere für Schiebedächer von Kraftfahrzeugen, gemäß dem Oberbegriff des Patentanspruchs 1, und eine Vorrichtung zur Durchführung dieses Verfahrens.

Es ist bekannt, Glasscheiben für Schiebedächer von Kraftfahrzeugen mit einem umlaufenden Rahmen aus Kunststoff zu versehen (siehe z.B. WO-A-89/01398, GB-A-2 171 442 oder EP-A-0 355 209). Obwohl dieser Rahmen oder der Rand des Dachausschnittes für das Schiebedach mit einer Dichtungsleiste versehen sind, kommt es bei den bekannten Schiebedächern immer wieder vor, daß keine ausreichende Dichtung gegen eindringendes Wasser erzielt wird. Zurückzuführen ist dies auf die relativ großen Toleranzen der Glasscheibe, welche sich auf die Außenabmessungen des Rahmens übertragen und zu relativ großen Toleranzen in der Spaltweite zwischen dem Rahmen und dem Dachausschnitt führen. Wird dadurch die Spaltweite zu groß, dann ist die Dichtung nicht mehr in der Lage, das Eindringen von Wasser zuverlässig zu verhindern.

Der Erfindung liegt die Aufgabe zugrunde, ein kostengünstiges Verfahren zur Herstellung einer Glasscheibe mit einem umlaufenden Rahmen aus Kunststoff zu schaffen, die reduzierte Toleranzen der Außenabmessungen hat. Diese Aufgabe wird gemäß der Erfindung durch ein Verfahren mit den Merkmalen des Anspruches 1 gelöst.

Durch die erfindungsgemäße Herstellung des Rahmens lassen sich in kostengünstiger Weise die großen Toleranzen der Außenabmessungen der Glasscheibe so weitgehend kompensieren, daß die Außenabmessungen des Rahmens in einem ausreichend engen Toleranzbereich liegen. Von besonderem Vorteil ist ferner, daß der Rahmen im gesamten Toleranzbereich der Glasscheibe dank der unterschiedlichen Neigungswinkel seiner Stirnfläche in Abhängigkeit von der Abweichung des Glasaußenmaßes vom Sollwert die eine Seite der Scheibe in keinem Falle zu übergreifen braucht. Vorteilhaft ist auch, daß das Umspritzen oder Umschäumen der Glasscheibe nicht aufwendiger ist als bei den bekannten Verfahren. Der erforderliche Toleranzausgleich wird nämlich automatisch mit Hilfe der umlaufenden Dichtung erreicht, an welche die Randzone der Glasscheibe angedrückt wird, ehe der Rand angespritzt oder angeschäumt wird.

Die Aufgabe, eine Vorrichtung anzugeben, mittels deren das erfindungsgemäße Verfahren in einfacher Weise durchgeführt werden kann, löst eine Vorrichtung mit den Merkmalen des Anspruches 2.

Vorteilhafte Ausführungsformen der erfindungsgemäßen Vorrichtung sind Gegenstand der Ansprüche 3 und 4.

Im folgenden ist die Erfindung anhand eines in der Zeichnung dargestellten Ausführungsbeispiels im einzelnen erläutert. Es zeigen
- Fig. 1: einen unvollständig dargestellten Schnitt des Ausführungsbeispiels mit einer Glasscheibe, deren Außenabmessung an der dargestellten Stelle zumindest annähernd den Größtwert hat,
- Fig. 2: einen unvollständig dargestellten Schnitt entsprechend Fig.1 mit einer Glasscheibe, die an der dargestellten Stelle eine Außenabmessung hat, welche zumindest nahe dem Kleinstwert innerhalb des Toleranzbereiches liegt,
- Fig. 3: einen Querschnitt eines Dichtungsprofils im unbelasteten Zustand,
- Fig. 4: einen Querschnitt des Dichtungsprofils gemäß Fig .3 bei Anlage einer Glasscheibe gemäß Anspruch 1 während des Anformens des Rahmens in einer Vorrichtung,
- Fig. 5: einen Querschnitt des Dichtungsprofils gemäß Fig .3 bei Anlage einer Scheibe gemäß Anspruch 2 während des Anformens des Rahmens in einer Vorrichtung,
- Fig. 6: einen unvollständig dargestellten Querschnitt des Ausführungsbeispiels mit am Rahmen festgelegtem Dichtungsstrang.

Eine Glasscheibe 1 für ein Kraftfahrzeug-Schiebedach hat eine rechteckige Form mit stark abgerundeten, längs eines Kreisbogens verlaufenden Eckbereichen. Insbesondere in diesen Eckbereichen sind die Toleranzen der Außenabmessung der Glasscheibe 1, also die Größe des Radius und die Abweichung von einem Kreisbogen relativ groß.

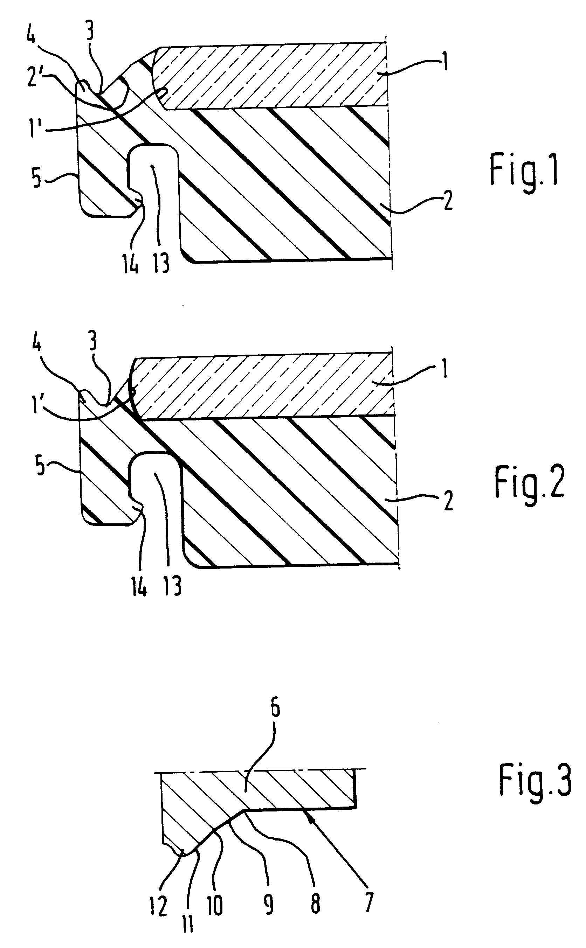

Um die Glasscheibe 1 mit den zugeordneten Betätigungsorganen in einfacher Weise verbinden zu können, weist sie einen Rahmen aus Kunststoff auf, welcher an der Unterseite der Glasscheibe 1 in einer Randzone sowie an der umlaufenden Begrenzungsfläche 1′ der Glasscheibe 1 anliegt. Wie Fig.1 zeigt, ist im Ausführungsbeispiel diese umlaufende Begrenzungsfläche 1′, welche sich einerseits an die Außenseite und andererseits an die Innenseite der Glasscheibe 1 anschließt, gekrümmt. An der in Fig.1 dargestellten Stelle des Eckbereiches der Glasscheibe 1 hat die Außenabmessung zumindest nahezu ihren Kleinstwert. Der Rahmen 2 bedeckt deshalb vollständig die Begrenzungsfläche 1′, läßt aber die Außenseite der Glasscheibe 1 frei.

Wie Fig.1 zeigt, ist ein erster Abschnitt der Stirnfläche 2′ des sich an die Begrenzungsfläche 1′ anschließenden Teils des Rahmens 2 gegenüber der Außenseite der Glasscheibe 1 derart geneigt, daß er mit der Begrenzungsfläche 1′ einen spitzen Winkel einschließen würde, auch wenn die Begrenzungsfläche 1′ lotrecht zur Außenseite der Scheibe 1 verlaufen würde. An diesen Abschnitt der Stirnfläche 2′ schließt sich ein Mittelabschnitt an, der noch stärker geneigt ist, also mit dem erstgenannten Abschnitt einen Winkel von weniger als 180° einschließt. Dieser Mittelabschnitt der Stirnfläche 2′ bildet die eine Flanke einer umlaufenden Nut 3, welche zu der durch die Außenseite der Glasscheibe 1 definierten Fläche hin offen ist und einen ausgerundeten Grund hat. Der äußere Abschnitt der Stirnfläche 2′ bildet die andere Flanke der Nut 3. Längs des äußeren Randes des Rahmens 2 verläuft deshalb ein Wulst 4, der nach außen hin durch die äußere Randfläche 5 des Rahmens 2 begrenzt ist.

Wie Fig.2 zeigt, ist dann, wenn die Glasscheibe 1 im Bereich des dargestellten Abschnittes eine Außenabmessung hat, welche zumindest nahezu bei dem Größtwert liegt, der sich an die Begrenzungfläche 1′ anschließende Bereich des Rahmens 2 entsprechend schmäler. Dieser Bereich kompensiert also die Unterschiede der Außenabmessung der Glasscheibe 1, so daß das durch die äußere Randfläche 5 bestimmte Außenmaß gleich groß ist wie bei einer Glasscheibe mit geringerem Außenmaß. Die geringere Breite des sich an die Begrenzungsfläche 1′ anschließenden Teils des Rahmens 2 wirkt sich dahingehend aus, daß die Begrenzungsfläche 1′ nicht mehr vollständig vom Rahmen 2 bedeckt ist, sondern eine obere, sich an die Außenseite der Glasscheibe 1 anschließende Zone unbedeckt bleibt und die Stirnfläche 2′ des Rahmens 2 wesentlich steiler als bei Glasscheiben mit kleinerer Außenabmessung zur Nut 3 hin abfällt. Im übrigen ist die Form der Nut 3 und vor allem auch die Form des Wulstes 4 die gleiche wie bei der in Fig.1 dargestellten kleineren Glasscheibe 1.

Ist die Glasscheibe 1 größer als in Fig.1 dargestellt und kleiner als in Fig.2 dargestellt, dann verläuft die Stirnfläche 2′ des Rahmens 2 flacher als bei der in Fig.2 dargestellten Glasscheibe 1, aber steiler als bei der in Fig.1 dargestellten Glasscheibe 1. Außerdem liegt zwischen den beiden in den Fig .1 und 2 dargestellten Größen der Glasscheibe 1 derjenige Wert, bei dem zu größeren Werten hin die Begrenzungsfläche 1′ nicht mehr vollständig vom Rahmen 2 bedeckt ist.

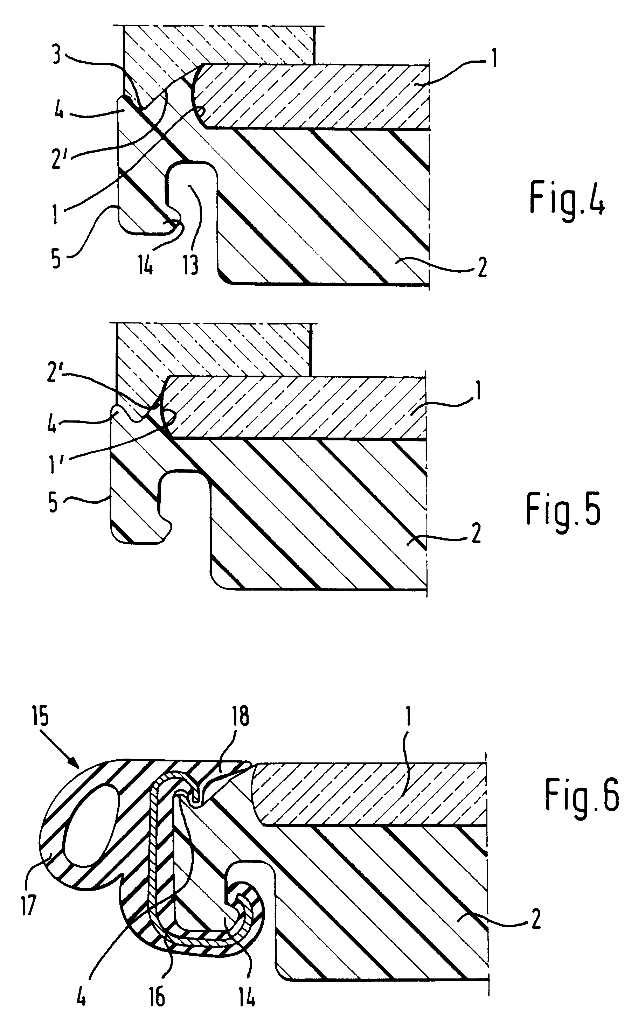

Damit der Kunststoff, aus dem der Rahmen 2 hergestellt wird, nicht auf die Außenseite der Glasscheibe 1 gelangt, liegt während der Herstellung des Rahmens 2 die Glasscheibe 1 mit einer Randzone ihrer Außenseite an einem umlaufenden Dichtungsprofil 6 aus einem elastischen, sich mit dem Kunststoff nicht verbindenden Material, beispielsweise Silikonkautschuk, an. Das Dichtungsprofil 6 hat deshalb eine ebene Anlagefläche 7 für die Glasscheibe 1. Die Breite dieser Anlagefläche 7 ist so gewählt, daß der Rand der Glasscheibe 1 mit dem kleinsten Außenmaß an der in Fig.3 innen verlaufenden Begrenzungslinie 8 der ebenen Anlagefläche 7 zu liegen kommt. Wenn das Dichtungsprofil 6 unbelastet ist, schließt sich an die Begrenzungslinie 8 eine erste Schrägfläche 9 an, welche mit der Anlagefläche 7 einen stumpfen Winkel einschließt. Im Ausführungsbeispiel beträgt dieser Winkel etwa 140°. Die Breite dieser ersten Schrägfläche 9 ist so gewählt, daß an ihre in Fig.3 links liegende Begrenzungslinie 10 der Rand der Glasscheibe 1 zu liegen kommt, wenn diese ihr größtes Außenmaß hat. An die Begrenzungslinie 10 schließt sich eine zweite Schrägfläche 11 an, die mit der ersten Schrägfläche 9 einen Winkel von etwa 160° bis 170° einschließt. Die zweite Schrägfläche 11 bildet die innere Flanke eines wulstförmigen Vorsprunges 12, dessen Profil so gewählt ist, daß der Rahmen 2 mit der Nut 3 und dem Wulst 4 versehen wird.

Die vorstehend beschriebene Profilform des Dichtungsprofils 6 auf der der Glasscheibe 1 und dem Rahmen 2 zugekehrten Seite hat zusammen mit der elastischen Nachgiebigkeit des Dichtungsprofiles 6 zur Folge, daß sich bei einer Glasscheibe 1 mit der kleinsten Außenabmessung der in Fig.1 dargestellte Verlauf der Stirnfläche 2′ des Rahmens 2 und bei einer Glasscheibe 1 mit der größten Außenabmessung der in Fig.2 dargestellte Verlauf der Stirnfläche 2′ automatisch ergibt.

Der zur Außenseite hin vorspringende Wulst 4 des Rahmens 2 und eine parallel zur äußeren Randfläche 5 verlaufende, in entgegengesetzter Richtung offene Nut 13 des Rahmens 2, in die hinein eine Nase 14 ragt, ermöglichen in einfacher Weise eine sichere Festlegung eines Dichtungsstranges 15 am Rahmen 2. Der elastisch nachgiebige Dichtungsstrang 15 enthält eine federnde Stahleinlage 16, welche den Wulst 4 und die Nase 14 clipsartig übergreift. Ein hohlschlauchartiger Teil 17 des Dichtungsstranges 15 dichtet den Spalt zwischen der äußeren Randfläche 5 des Rahmens 2 und der Begrenzung des Dachausschnittes ab. Eine elastische, vorgespannte Zunge 18 des Dichtungsstranges 15 legt sich an die Stirnfläche 2′ des Rahmens 2 an und erstreckt sich auch bei einer Glasscheibe mit kleinster Außenabmessung bis zu deren Außenseite hin, wie Fig.6 zeigt.

## Patentansprüche

1. Verfahren zur Herstellung einer Glasscheibe, insbesondere für Schiebedächer von Kraftfahrzeugen, bei dem an den Rand der Glasscheibe (1) ein Rahmen (2) aus Kunststoff durch Spritzen oder Schäumen angeformt wird, dadurch gekennzeichnet, daß vor der Zuführung des Kunststoffes zu der Begrenzungsfläche (1') der Glasscheibe (1) diese mit ihrer vom Kusntstoff freizuhaltenden Fläche an ein umlaufendes Dichtungsprofil (6) aus einem elastischen Material angedrückt wird, welches eine Randzone der freizuhaltenden Fläche der Glasscheibe sowie, von dieser Fläche beginnend, die Begrenzungsfläche (1') der Glasscheibe (1) in einem Ausmaß bedeckt, das um so größer ist, je größer das Außenmaß der Glasscheibe ist.

2. Vorrichtung zur Durchführung des Verfahrens gemäß Anspruch 1, gekennzeichnet durch ein umlaufendes, elastisches Dichtungsprofil (6) zur dichten Anlage an einer Randzone der freizuhaltenden Seite der Glasscheibe (1), welches neben einer ebenen Innenzone (7) für die Anlage an der freizuhaltenden Seite, beginnend an einer Linie (8), deren Verlauf sich mit dem Verlauf der von der freizuhaltenden Seite und der sich an diese anschließenden Begrenzungsfläche (1') gebildeten Kante bei größtem Untermaß der Glasscheibe (1) deckt, eine Schrägfläche (9, 11) aufweist.

3. Vorrichtung nach Anspruch 2, dadurch gekennzeichnet, daß die Schrägfläche zwei nebeneinander liegende, ebene Zonen (9, 11) aufweist, die einen stumpfen Winkel miteinander einschließen.

4. Vorrichtung nach Anspruch 3, dadurch gekennzeichnet, daß der Übergang von der einen zu der anderen ebenen Zone (9, 11) längs einer Linie (10) verläuft, auf die der Rand einer Glasscheibe (1) mit kleinstem Untermaß ausgerichtet ist.

## Claims

1. Method of manufacturing a pane of glass particularly for sunshine roofs for motor vehicles, in which a frame (2) of plastics material is formed on the edge of the pane of glass (1) by injection-moulding or foaming, characterized in that before the plastics material is supplied to the peripheral surface (1') of the pane of glass (1), the surface thereof which is to be kept clear of plastics material is pressed against a contouring profiled packing element (6) of a resilient material which covers an edge region of the surface of the pane of glass to be kept clear and, starting from this surface, also covers the peripheral surface (1') of the pane of glass (1) to a greater extent the greater the overall size of the pane of glass.

2. Device for carrying out the method according to Claim 1, characterized by a contouring, resilient, profiled packing element (6) which is intended to bear tightly against an edge region of the side of the pane of glass (1) to be kept clear, and which, next to a flat inner region (7) for bearing against the side to be kept clear, has an oblique surface (9, 11) starting at a line (8) the course of which coincides, when the pane of glass (1) is most undersized, with the course of the edge formed by the side to be kept clear and by the peripheral surface (1') connected thereto.

3. Device according to Claim 2, characterized in that the oblique surface has two adjacent flat regions (9, 11) which together enclose an obtuse angle.

4. Device according to Claim 3, characterized in that the transition from one flat region (9, 11) to the other extends along a line (10) on which the edge of a least undersized pane of glass (1) is aligned.

## Revendications

1. Procédé de fabrication d'un vitrage, en particulier pour toits coulissants de véhicules automobiles, dans le cas duquel on forme, contre le bord de la vitre (1), un cadre (2) en plastique par injection ou par moussage, procédé caractérisé par le fait qu'avant d'envoyer le plastique contre la surface limite (1') de la vitre (1), on appuie celle-ci, par sa surface qui doit être conservée libre de plastique, contre un profilé d'étanchéité périphérique (6) en matériau élastique qui recouvre une zone de bordure de la surface de la vitre à conserver libre ainsi que, à partir de cette surface, la surface limite (1') de la vitre (1), dans une mesure d'autant plus importante que la dimension extérieure de la vitre est plus grande.

2. Dispositif pour la mise en oeuvre du procédé selon la revendication 1, caractérisé par un profilé d'étanchéité périphérique élastique (6) à appliquer de façon étanche contre une zone de bordure de la face de la vitre (1) à conserver libre, profilé qui, à côté d'une zone intérieure plane (7) pour l'appui contre la face à conserver libre, présente une surface oblique (9, 11) en commençant à une ligne (8) dont, pour la plus grande dimension autorisée de la vitre (1), l'allure coincide avec l'allure de l'arête formée par la face à conserver libre et par la surface limite (1') qui s'y raccorde.

3. Appareil selon la revendication 2, caractérisé par le fait que la surface limite présente deux zones planes (9, 11) qui sont situées l'une à côté de l'autre et font entre elles un angle obtus.

4. Appareil selon la revendication 3, caractérisé par le fait que le passage de l'une à l'autre des zones planes (9, 11) se fait le long d'une ligne (10) sur laquelle est alignée la bordure d'une vitre (1) ayant la plus petite dimension autorisée.
